# EUROPEAN PATENT SPECIFICATION

(11) **EP 1 266 563 B1**
(45) Date of publication and mention of the grant of the patent: **23.01.2008**
(21) Application number: 02076948.5
(22) Date of filing: 17.05.2002
(51) Int. Cl.: A01F 15/07, A01F 15/08

(54) **Roundbaler for agricultural stalk material**
Rundballenpresse für landwirtschaftliche Halmgüter
Presse à balles rondes pour des produits agricoles

(30) Priority: 11.06.2001 EP 01202216
(43) Date of publication of application: 18.12.2002
(73) Proprietor: Welger Maschinenfabrik GmbH, 38304 Wolfenbüttel (DE)
(72) Inventor: Lühr, Kord Hinrich, 38304 Wolfenbüttel (DE); Honhold, Joost, 38304 Wolfenbüttel (DE); Ehrenpfort, Uwe Wiechart, 29525 Uelzen (DE)

(56) References cited:
- EP-A- 0 110 056
- EP-A- 0 217 715
- EP-A- 0 288 600
- EP-A- 0 893 053
- EP-A- 0 983 720
- EP-A- 1 029 440
- EP-A- 1 034 695
- EP-A- 1 077 024
- EP-A- 1 077 025
- DE-A- 3 607 040
- DE-A- 4 138 499
- US-A- 5 263 410

## Description

The invention relates to a round baler according to the precharacterising clause of claim 1.

In the case of round balers which have a wrapper connected downstream thereof, transfer of the round bale from the round baler to the wrapper constitutes a serious problem.

The above-described round baler, on which the invention is based, may be derived from DE 41 38 499 A1. With this baler, a stationarily arranged bale chute device with a constant, i.e. unalterable inclination, is attached below the conveying floor of the round baler. A bale loading stirrup is arranged downstream of the chute device in the direction of travel, which bale loading stirrup may be swivelled hydraulically about an axis of rotation adjacent the wrapper and interacts with a wrapping table which may likewise be hydraulically swivelled. Once the rear housing has swung fully open, the round bale is intended to roll over the chute device onto the bale loading stirrup, which is then intended to lift the round bale according to the overhead principle onto the wrapping table, which is inclined slightly in the direction of travel.

This previously known round baler exhibits the following fundamental disadvantages:
- The chute device may exhibit only a relatively slight inclination to the horizontal, because the rear housing cannot otherwise be opened or closed. In operation on a downwards slope, reliable transfer to the bale loading stirrup cannot therefore be ensured.
- The beginning of the chute device is located at a relatively large distance downstream of the end of the conveying floor. In this way, the round bale initially drops onto other stationary frame parts and is braked. Progress down the chute to the bale loading stirrup is thereby slowed.
- The outer swivel arc of the rear housing overlaps with the outer swivel arc of the bale loading stirrup or the outer rim of the round bale swivelled with the bale loading stirrup. This produces the considerable time disadvantage that the rear housing can only be reclosed when the round bale has reached its wrapping position on the wrapping table. The throughput of the assembly is thereby reduced considerably.
- The bale loading stirrup has to cope with the relatively large weight of a round bale over a relatively long lever arm, the consequence being that its construction is heavy and expensive.
- The structural length of the assembly is relatively great and is disadvantageous with regard to narrow field access and tight turning manoeuvres in fields.

The combination of round baler and trailer-mounted wrapper described and illustrated in GB 2221203 A exhibits similar disadvantages.

DE 197 31 520 A1 illustrates and describes a round baler which is arranged with a wrapper on the same chassis. In this instance, a displaceable transport device is provided between round baler and wrapper, which device is so designed and displaceable that the rear housing of the round baler may be opened or closed immediately after bale ejection irrespective of the position of the transport device with or without round bale. The advantage of this is that no complex lifting devices are needed for the heavy bales. However, this device has the considerable disadvantage that, because of the relatively large free space between the rear lower baling roller of the swung-open round baler and the foremost position of the wrapping table, in the direction of the travel, a round bale drops downwards immediately behind the baling roller and is jammed in the space, instead of being delivered to the transport device. Another disadvantage is the considerable structural complexity of the simultaneously horizontally and vertically displaceable transport device.

The functional unit illustrated and described in EP 1 077 025 A1 reveals a transfer means consisting of two mutually cooperating bale lifting devices, which may be actuated in succession only after opening of the rear housing and ejection of the round bale. Time is lost because the lifting device which is at the front in the direction of travel has firstly to be swivelled upwards for bale transfer and then back into its starting position before the rear housing may be closed. Moreover, the functional unit is of relatively long and heavy construction, owing to the long lever arms required for the transfer means to the rear when viewed in the direction of travel.

In the case of round balers operating alone, see for example G 82 13 107 U1 and DE 36 07 040 A1, chute devices are known per se, but these do not suffer from the problem of having to transfer a round bale above ground level rapidly to a wrapper.

The object of the invention is to improve the round baler described above in such a way as to ensure that the round bale is transferred reliably and as quickly as possible to the wrapper by simple means and without the expenditure of a large amount of force.

Taking the above-described round baler as basis, this object is achieved in that the inclination of the chute device is adjustable. With regard to the further development of the invention, reference is made to claims 2 to 37.

Due to the adjustability, according to the invention, of the chute device, the latter is no longer tied to the constructionally very limited free structural space below the rear housing in the closed position, such that said chute device may be set substantially more steeply according to the invention shortly after opening of the rear housing is begun than is the case with all the bale chute devices known to date with preset inclination. This makes it possible to exploit the rolling energy of the round bale, so that the round bale rolls above the ground far enough out of the range of the swivel arc of the rear housing and as far as the wrapping table. The rear housing may thereby be just as quickly closed and the baling process begun as is the case with solo-operating round balers.

As a development of the invention, it is proposed that the chute device may be moved about at least one horizontal axis of rotation positioned perpendicularly to the direction in which the round bale rolls. The axis may be arranged either on the round baler or on the supporting frame of round baler and wrapping apparatus. An axis of rotation on the supporting frame has the advantage that virtually no changes are necessary to the round baler.

The chute device assumes at least a working position when the rear housing is in the open or partially open position and a rest position when the rear housing is in a closed position. Due to the free space available after opening of the rear housing, the inclination may be adjusted to a sufficient degree for it to be possible to preset three working positions for example: upwards slope, flat, downwards slope.

In order to exploit to the optimum the rolling energy of the round bale, it is advantageous for the front end, in the direction of travel, of the chute device directly to adjoin the baling elements in the front housing in the space freed up after swinging open of the rear housing. In this way, the round bale reaches the chute device immediately downstream of the last baling roller, when viewed in the direction of travel, and begins as quickly a possible its rolling movement on the sloping plane.

The end of the chute device, lying to the rear in the direction of travel, appropriately lies in its working position, during rolling of the round bale, against a limit stop fixed to the frame, such that the (great) weight forces of the round bale are directed into the supporting frame and a precise height position is ensured for the adjacent second chute device.

To ensure that the round bale reaches the chute device as quickly as possible, the latter is adjusted into its working position during opening of the rear housing, i.e. once the rear housing has reached an aperture angle of approx. 20°.

A further development of the invention provides that a second chute device, constructed as a bale holding means, is connected downstream of the first chute device, which second chute device, in a working position, extends the sloping plane of the first chute device, along which the round bale rolls as far as the wrapping table. The lever arm needed to transfer the round bale into the wrapping position is relatively small, since the round bale already adjoins the wrapping table in its end position on the chute device. Ground clearance is only reduced temporarily when the bale holding means is in the lower position.

The rear housing is suitable for actuation of the chute device, because additional auxiliary drives are then unnecessary.

In principle, it is also possible to preset the inclinations of the chute device manually. On actuation of the rear housing or another control operation, the chute device is then brought into the position with the desired inclination.

Semi-automatic operation is more user-friendly, this providing that the chute device is in active connection with a control and/or operating unit, by means of which a plurality of chute device inclinations may be preset and set by the operator from the tractor by pressing a button.

Finally, it is also possible to control the inclination of the chute device automatically as a function of the measured slant of the round baler or the wrapper.

A compact, easily manoeuvrable functional unit is obtained if the round baler and the wrapper are arranged on the same running gear.

For further explanation of the invention, reference is made to the drawings and to the following description of a plurality of exemplary embodiments. In the drawings:
- Fig. 1: is a schematic side view during the baling and/or wrapping process of a round baler according to the invention with a hitched wrapper, the chute device being in the rest position.

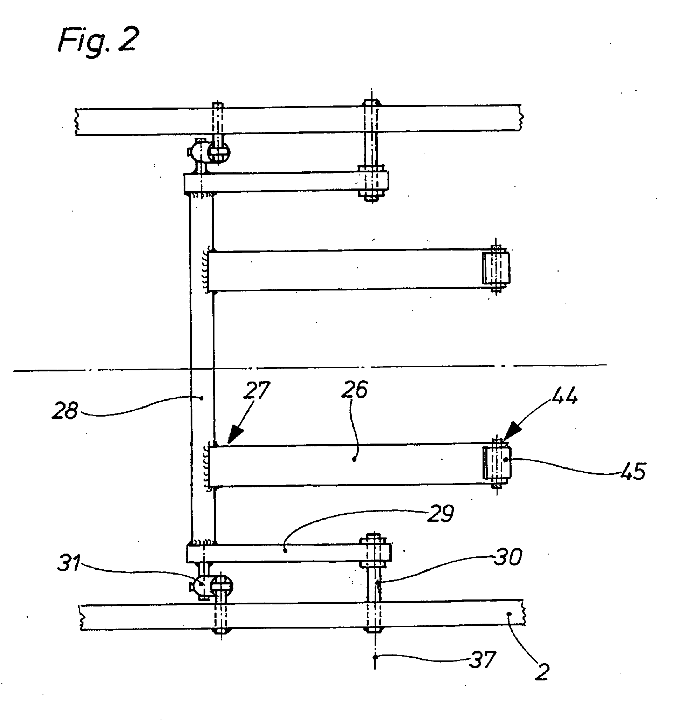

- Fig. 2: is a plan view of the chute device of Figure 1 along line A - A, when viewed in the direction of the arrows,
- Figs. 3 to 6: are side views according to Figure 1 of a plurality of successive functions,
- Fig. 7: is a schematic side view of a second embodiment of a chute device, the rest position with closed rear housing being shown by a solid line and the working position with partially open rear housing being shown by a broken line,
- Fig. 8: is a view according to Fig. 7 of a third embodiment of a chute device and
- Fig. 9: is a plan view of the chute device according to Figure 8.

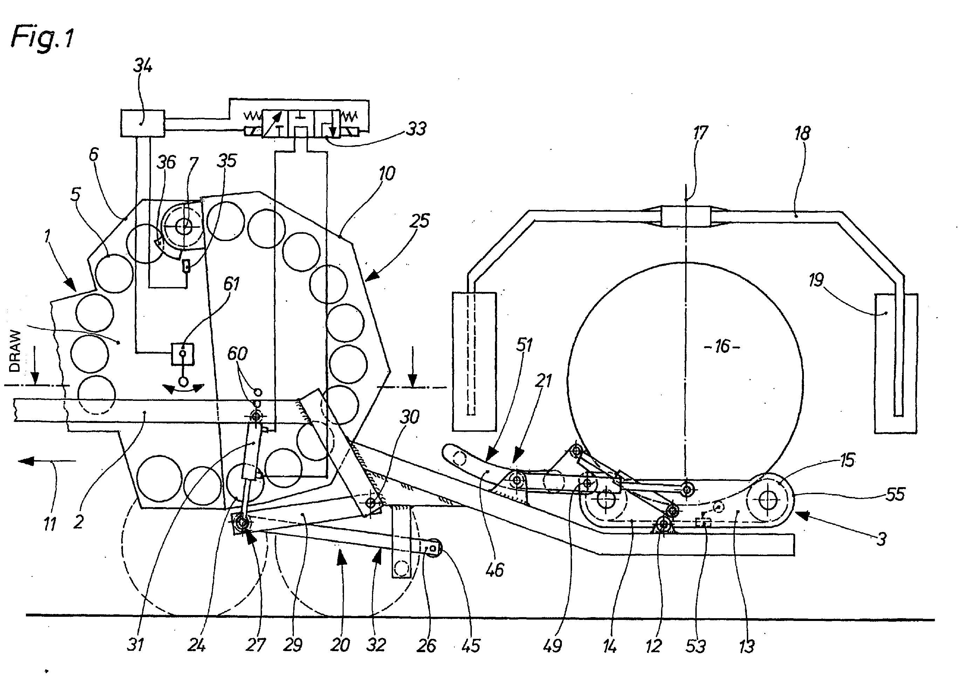

The round baler 1 shown in Figure 1 is connected to a wrapper 3 by a supporting frame 2. Round baler 1 and wrapper 3 are carried by a common running gear, only the wheel outlines of a two-axle running gear being shown, for the sake of clarity. The supporting frame 2 may be of two-part construction, in order to be able to detach the wrapper 3 for solo operation of the round baler 1 and/or the wrapper 3.

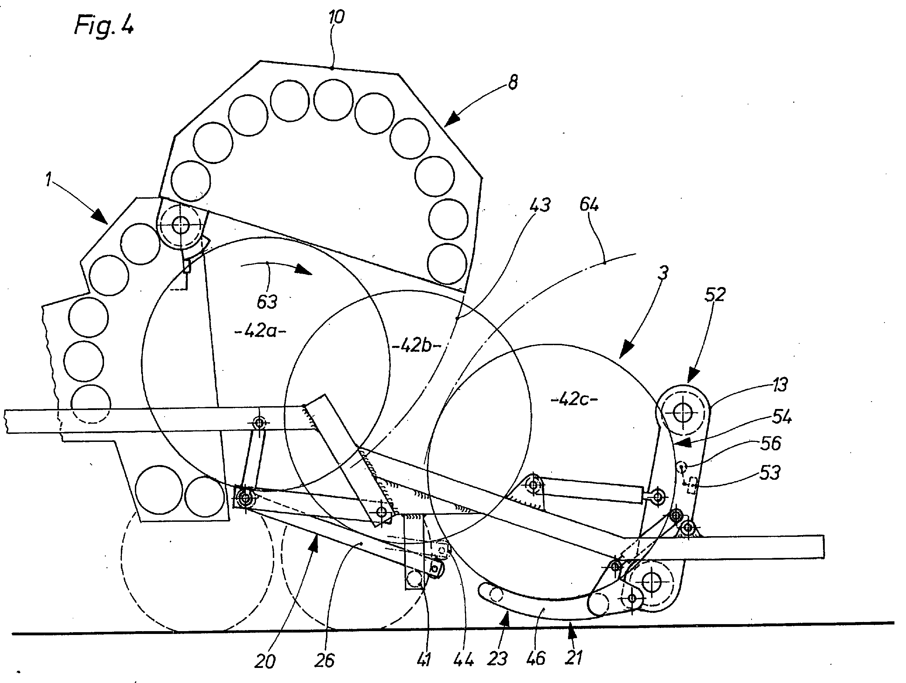

The round baler 1 is known from DE 24 43 838 C3, for example. It comprises a baler housing having a baler chamber 4, which is formed of revolving, drivable baling elements 5. The baler housing consists of a fixed-frame front housing 6 and a rear housing 10 which may be opened about an upper axis 7 into a discharge position 8, see Fig. 4, for the finished round bale 9.

The wrapper 3 consists substantially of a wrapping table 13 which may be tilted forwards and backwards about an axis 12 positioned perpendicularly to the direction of travel 11 and has drivable rollers 15 wound round with conveyor belts 14, which rollers 15 carry a round bale 16, and of a double wrapping arm 18 rotatable about an elevated vertical axis 17 and having two film rolls 19, which circle the round bale 16 about a horizontal cylinder axis during rotation thereof and thereby wrap it in film. For the sake of clarity, the double wrapping arm 18 is shown only in Fig. 1.

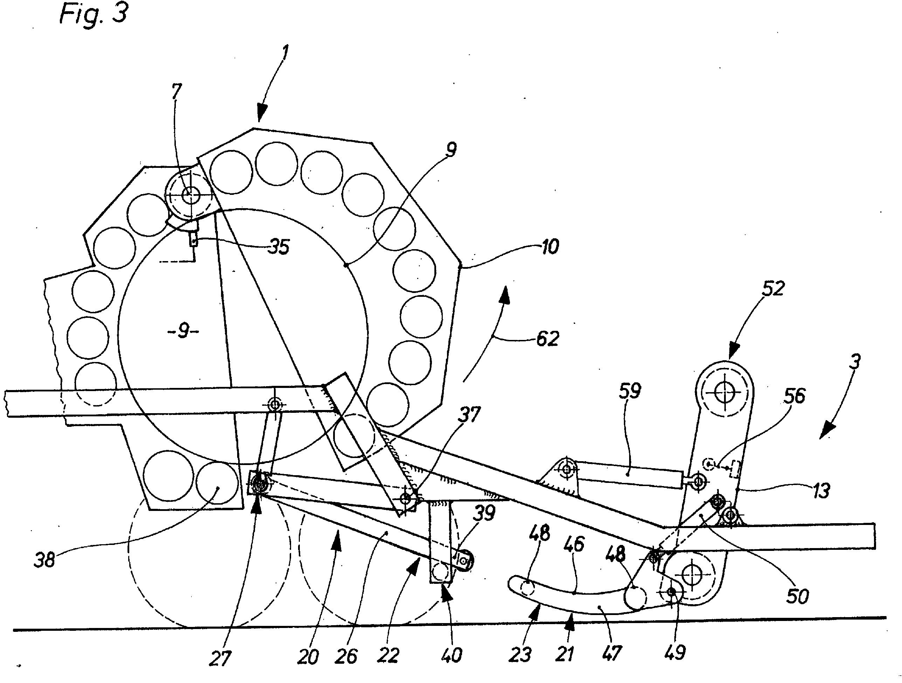

Transfer of a round bale 9 from the round baler 1 to the wrapper 3 is achieved by two chute devices 20, 21, which in their working positions 22, 23, see Figures 3 and 4, form a sloping plane which ends above the ground at the wrapping table 13.

The first chute device 20 consists of two ramps 26 arranged spacedly next to one another, beginning beneath the first baling roller 24 of the rear housing 10, when the latter is in the closed position 25, and extending rearwards when viewed in the direction of travel 11.

The ramps 26 are arranged spacedly next to one another, at a distance which is smaller than the bale width. The front ends 27 of the ramps 26 are fixed to a crossbar 28, which extends outwards on both sides beyond the baling chamber width. Longitudinal bars 29 are connected non-rotatably with the crossbar 28 and may be swivelled on pins 30 attached to the supporting frame 2. The crossbar 28 is connected to the supporting frame 2 on both sides via hydraulic cylinders 31. In the rest position 32, illustrated in Figure 1, of the chute device 20, the hydraulic cylinders 31 are extended. The hydraulic cylinders 31 are in active connection with a hydraulic valve 33, a control and/or operating unit 34 and a sensor 35, which, on opening of the rear housing 10, for example by approx. 20°, runs over a switch segment 36 and sends signals to the control and/or operating apparatus 34 or even triggers the hydraulic valve 33 directly, whereupon the ramps 26 swivel about the axis of rotation 37 formed by the pins 30 into the working position 22 illustrated in Fig. 3. When the chute device 20 is moved out of the rest position 32 into the working position 22, the front end 27 of the chute device 21 is raised in an approximately vertical direction into the space freed up behind the baling roller 38 after opening of the rear housing 10. In this way, the round bale 9 arrives on the chute device 20 directly after leaving the baling chamber 4.

In the working position 22, the rear free ends 39 of the ramps 26 rest on a limit stop 40, which is formed by a transverse tube 41 attached to the supporting frame 2 and may be adjusted in the vertical direction. The inclination and length of the ramps 26 are dimensioned in their working position 22 in such a way that the round bale 42a, b, c rolls along the second chute device 21 extending the sloping plane of the first chute device 20 as far as the wrapping table 13 and thus arrives outside the outer swivel arc 43 of the rear housing 10, such that the rear housing 10 may be closed as quickly as possible, i.e. just as quickly as if no wrapper 3 were connected downstream. Moreover, the ramps 26 have to extend backwards so far in their rest position 32 that a round bale 42c is kept out of range of the outer swivel arc 43, e.g. in operation on a downwards slope, when the round bale 42c has a tendency to roll backwards, see ramp ends 44 shown by broken lines in Figure 4.

To prevent damage to the round bale or its wrapper in the event of its rolling backwards, the free ramp ends 44 may each comprise a roller 45. For adaptation to different bale diameters, the ramps may also be adjustable in length. To swivel the ramps out of the working position back into the rest position, it is also possible to use a spring element, such that a single-acting hydraulic cylinder is sufficient. Instead of the limit stop 40 on the supporting frame 2, an adjusting and securing means could also be provided, which acts on at least one ramp 26 and on the stationary front housing 6. Within the scope of the invention, the chute device may be curved or multi-part with a fold axis instead of comprising a straight sloping plane.

The second chute device 21 consists of a rectangular stirrup 46, the longitudinal struts 47 of which are curved slightly downwards in accordance with the bale contour, lie within the bale width and are connected together by cross-struts 48. The stirrup 46 is coupled rotatably to the wrapping table 13 about an axis of rotation 49, which lies parallel to the axis of rotation 37 of the first chute device 20. Hydraulic cylinders 50, which are coupled at one end to the longitudinal struts 47 and at the other end to the wrapping table 13, serve to bring the stirrup 46 into a working position 23 or into a rest position 51, see Fig. 1. In the working position 23, the stirrup 46 functions as a chute device 21, which adjoins the first chute device 20 as an extension thereof and allows the round bale 42c to roll towards the wrapping table 13 located in a loading position 52, which wrapping table 13 in this position forms an angle of approximately 90° with the chute device 21 or the sloping plane. A feeler means 53 is provided on the wrapping table 13, which sends a signal to the control/operating unit 34 to the effect that the round bale 42c has reached its end position 54 on the second chute device 21. This signal serves for example to trigger closure of the rear housing 10 and at the same time to initiate swivelling of the wrapping table 13 into its wrapping position 55. The feeler means 53 may consist, for example, of a spring-loaded feeler lever 56 with switch element. When the wrapping table 13 is unloaded, i.e. empty, the feeler lever 56 assumes a position according to Fig. 3. When a round bale 42c runs into the loading position 52 against the wrapping table 13, the feeler lever 56 swivels in accordance with Fig. 4. During swivelling of the wrapping table 13 out of its loading position 52 into its horizontal wrapping position 55, the position of the stirrup 46 relative to the wrapping table 13 remains unchanged, i.e. the stirrup 46 serves, in the working position 23, also as a bale holding means, holding the round bale 42c secure during swivelling of the wrapping table 13. Once the wrapping table 13 has reached its horizontal wrapping position 55, the stirrup 46 swivels, before wrapping starts, out of the circular path of the wrapping arm 18 into the rest position 51 parallel to the wrapping table 13, see Fig. 1. To discharge the ready-wrapped round bale 57 from the wrapping table 13, the latter is tipped briefly backwards into a discharge position 58. Swivelling of the wrapping table 13 is effected by hydraulic cylinders 59, which are coupled to the supporting frame 2 and the wrapping table 13. In the event of difficult operation on a downwards slope, it may so happen that the round bale does not quite reach the wrapping table, because the sloping plane is virtually horizontal. To assist in such a situation, a plurality of offset pins 60, see Fig. 1, are provided on the supporting frame 2 for adjustable coupling of the hydraulic cylinders 31 so as to set the ramps 26 at different inclinations relative to the ground or the round baler 1. In this way, in steeply sloping positions the inclination of the chute device 20 may be additionally enlarged or, where necessary, reduced. Actuation in dependence on the rear housing 10 remains unchanged, but may also be effected manually by direct activation of the hydraulic cylinders 31. In the case of semi-automatic operation, different inclinations may for example be preprogrammed, e.g. for operation on a downwards slope, an upwards slope or on the flat, and selected by the operator from the tractor by pressing a button. Fully automatic operation provides an inclination sensor 61 on the round baler 1 or on the supporting frame 2, which measures the longitudinal inclination of the round baler 1 to the vertical, for instance, and transmits the measurement signals to a control, evaluation and calculation unit, which automatically controls adjustment of the inclination of the ramps 26 as a function of the slant of the round baler 1.

### The method of operation is as follows:

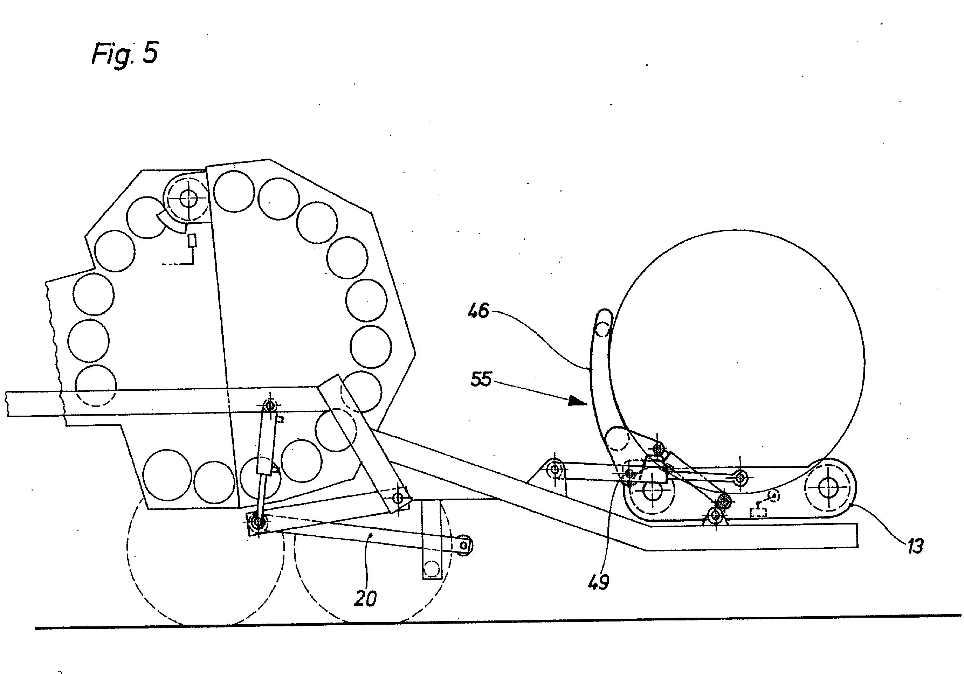

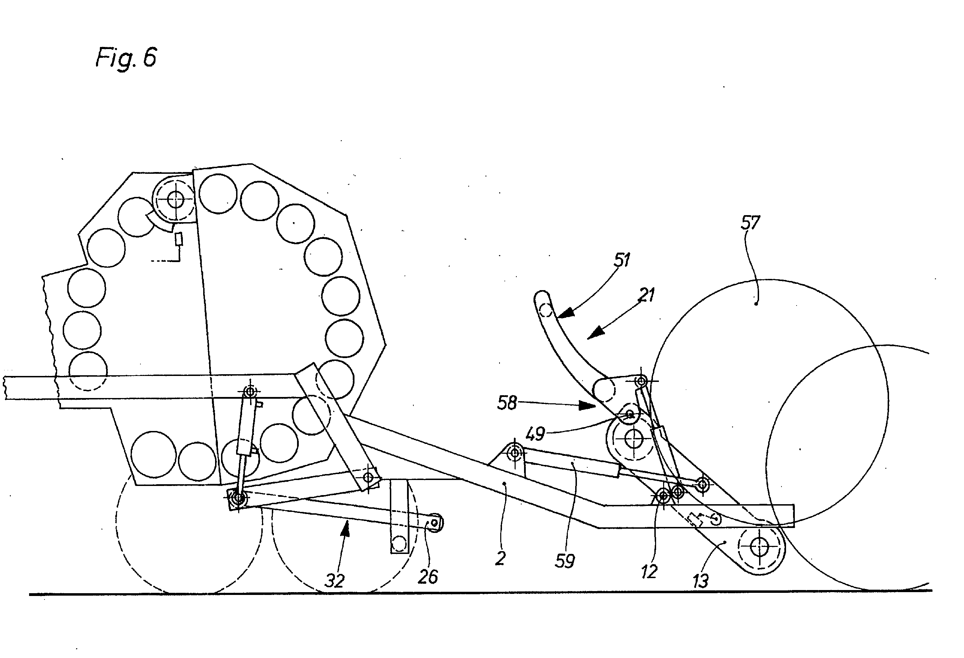

During the baling process and/or the wrapping process, the functional elements assume the positions illustrated in Figure 1: the rear housing 10 is in the closed position 25, the chute devices 20, 21 are in their rest positions 32, 51 and the wrapping table 13 is in the wrapping position 55. As soon as a round bale 9 has reached the desired compressed density in the round baler 1 and the round bale 9 has been tied up with binding material, the rear housing 10 is swung open in the direction of the arrow 62 on a signal derived, for example, from completion of binding. Once an opening path of approx. 20° has been covered, the sensor 35 runs over the switch segment 36 and transmits a signal to the control/operating unit 34, which actuates the hydraulic cylinders 31, 50, 59, such that the chute devices 20, 21 and the wrapping table 13 are moved into the positions 22, 23, 52 shown in Fig. 3. Once the rear housing 10 reaches the discharge position 8 shown in Figure 4, the round bale 42a rolls over the last baling roller 24 in the front housing 6, which serves as a tipping edge, along the chute devices 20, 21 in the direction of the arrow 63 into the end position 54 against the wrapping table 13 and in so doing actuates the feeler means 53, which has the effect, via the hydraulic valve 33 or the control unit 34, of causing the rear housing 10 to travel into its closed position 25, the chute device 20 into its rest position 32 and the wrapping table 13 with the round bale 42c into the wrapping position 55, as shown in Fig. 5. The swivel arc 43 of the rear housing 10 and the swivel arc 64 of the outer bale rim do not overlap during swivelling of the wrapping table 13, such that all movements may proceed independently of one another and as quickly as possible and a new baling cycle may begin. Before wrapping begins, the bale holding means 21 or chute device is swivelled into the rest position 51 shown in Figure 1. Baling and wrapping proceed simultaneously. When the wrapping process is complete, the wrapping table 13 is swivelled into the discharge position 58 shown in Fig. 6 and the round bale 57 is discharged onto the ground. If baling of the next bale is complete, a new transfer cycle according to Figure 3 begins.

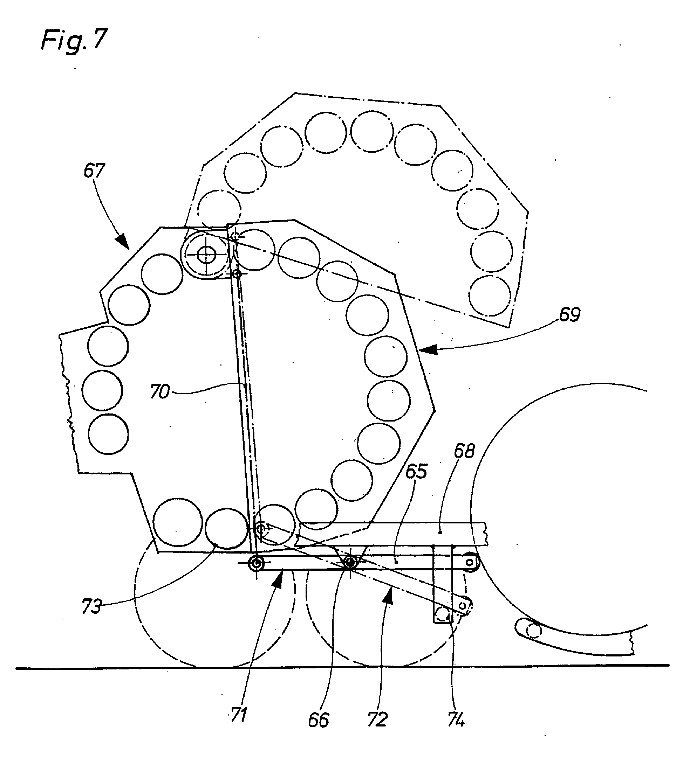

In the exemplary embodiment illustrated in Fig. 7, two ramps 65 arranged spacedly next to one another are mounted swivellably in the manner of rockers about a stationary axis of rotation 66, which is arranged either on the round baler 67 or on the supporting frame 68. The axis of rotation 66 is arranged approximately two-fifths of the way along the ramp 65. The ramps 65 are actuated by the rear housing 69 via a control rod 70. When the rear housing 69 is closed, the ramps 65 adopt a rest position 71 and swivel, when opening of the rear housing 69 begins, into the working position 72, in which the front end adjoins the baling roller 73 and the rear end rests on the limit stop 74.

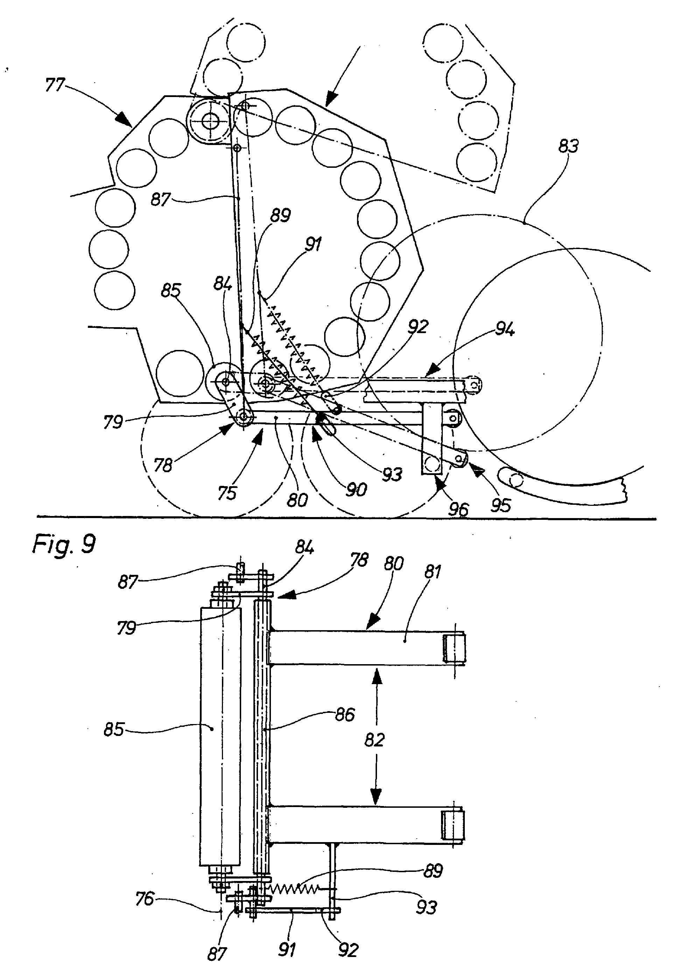

The exemplary embodiment illustrated in Figs. 8 and 9 of a chute device 75 consists of a swivel arm arrangement 78 mounted rotatably on the front housing 78 about an axis of rotation 76, said swivel arm arrangement 78 having forwardly directed arms 79 and a U-shaped stirrup 80 mounted rotatably on the swivel arm arrangement 78 and having rearwardly directed arms 81, which form the ramps 82 for the round bales 83. The forwardly directed arms 79 are connected non-rotatably but detachably with a transverse shaft 84 extending over the baler width and are mounted on the opposite baler sides coaxially on the shaft ends of the baling roller 85. The U-shaped stirrup 80 is formed by a transverse tube 86, to which the rearwardly directed arms 81 are welded. The transverse tube 86 may be swivelled on the transverse shaft 84. A control rod 87 is provided on at least one side, which rod 87 connects the swivel arm arrangement 78 with the rear housing 88. Between control rod 87 and U-shaped stirrup 80 there is provided a tension spring 89, which, when the rear housing 88 is closed, pulls the stirrup 80 into the rest position 90 shown by solid lines in Fig. 8.

Between control rod 87 and stirrup 80, there is arranged a link rod 91 with elongate hole 92, the purpose of which is to limit upwards swivel movement and in which a pin 93 attached to the stirrup 80 engages. Immediately after opening of the rear housing 88, the stirrup 80 is moved by the control rod 87 initially upwards into the position 94 shown by broken lines in Fig. 8, in which the front end of the stirrup 80 lies behind the baling roller 85. Upon ejection of the round bale 83, the latter pushes the ramps 82 into the working position 95 shown by broken lines in Fig. 8, in which the ramps 82 rest on the limit stop 96 and form a steep sloping plane.

By displacing the chute devices 20, 21, 65, 78 into the space freed up by opening of the rear housing, it is possible, despite combination with a wrapper, to achieve on a sloping plane the inclination necessary in each case to enable the round bale to roll above the ground reliably and quickly as far as the wrapper and out of range of the swivel arc of the rear housing, instead of using complex, procedure-delaying, active lifting and conveying means.

## Claims

1. A round baler (1, 67, 77) for agricultural stalk material, which is arranged, in combination with a wrapper (3) for wrapping a round bale in film, on at least one running gear, at least one chute device (20, 65, 75) for the finished round bale (9, 42a, 83) being provided between the round baler (1, 67, 77) and the wrapper (3), **characterised in that** the inclination of the chute device (20, 65, 75) is adjustable.

2. A round baler according to claim 1, **characterised in that** the chute device (20, 65, 75) may be moved about at least one horizontal axis of rotation (37, 66, 76, 84) positioned perpendicularly to the direction (63) in which the round bale (9, 42a, 83) rolls.

3. A round baler according to claim 2, **characterised in that** one axis (93) takes the form of a rotary slide guide (91, 92).

4. A round baler according to claim 2 or claim 3, **characterised in that** the axis (76, 84) is arranged on the round baler (77).

5. A round baler according to claim 2 or claim 3, **characterised in that** the axis (37, 66) is arranged on the supporting frame (2, 68) of round baler (1, 67) and wrapper (3).

6. A round baler according to one or more of the preceding claims, **characterised in that** at least two positions (22, 32, 72, 71, 95, 90) are provided for the chute device (20, 65, 75).

7. A round baler according to claim 6, **characterised in that** the chute device (20, 65, 75) assumes at least a working position (22, 72, 95) when the rear housing is in the open or partially open position (8) and a rest position (32, 71, 90) when the rear housing (10, 69, 88) is in a closed position (25).

8. A round baler according to claim 6 or claim 7, **characterised in that,** in its working position (22, 94), the front end (27, 79), in the direction of travel (11), of the chute device (20, 75) adjoins the baling elements (5, 85) in the front housing (6, 77) in the space freed up after swinging open of the rear housing (10, 88).

9. A round baler according to one of claims 6 to 8, **characterised in that** the end (39, 44, 81) of the chute device (20, 65, 75), lying to the rear in the direction of travel (11), lies in its working position (22, 95), during rolling of the round bale (42a, b, c), against a limit stop (40, 41, 74, 96) fixed to the frame.

10. A round baler according to claim 9, **characterised in that** the rear end (39, 44, 81) of the chute device (20, 75) exhibits, in its working position (22, 95), such a distance from the ground and from the wrapper (3) that the round bale (42a, b, c) rolls above the ground on an imaginary extension rearwards as far as the wrapper (3) into an end position (54) which lies outside the outer swivel arc (43) of the rear housing (8).

11. A round baler according to one of claims 6 to 10, **characterised in that** the rear end (39, 81) of the chute device (20, 65, 75) projects, in its rest position (32, 71, 90) beyond the outer swivel arc (43) of the rear housing (10, 69, 88).

12. A round baler according to one of claims 6 to 11, **characterised in that** the chute device may be extended and retracted in the longitudinal direction at least in its working position under the action of force.

13. A round baler according to one or more of the preceding claims, **characterised in that,** on both sides, the chute device comprises guide plates for lateral guidance of the round bale.

14. A round baler according to one or more of the preceding claims, **characterised in that** the chute device (20, 65, 76) is of one part or multi-part construction.

15. A round baler according to one or more of the preceding claims, **characterised in that** the chute device (75) is connected in articulated manner via bars (79) to the round baler (1) or the supporting frame (2).

16. A round baler according to one or more of preceding claims 6 to 14, **characterised in that** the chute device (65, 75) may be coupled to the rear housing (69, 88) via a control rod (70, 87).

17. A round baler according to one or more of preceding claims 6 to 15, **characterised in that** the chute device (20, 65, 75) is displaced into its working position (22, 72, 95) under the action of force during opening of the rear housing (10, 69, 88).

18. A round baler according to one or more of preceding claims 6 to 17, **characterised in that** the chute device takes the form of two,ramps (65, 82) arranged spacedly next to one another and swivellable about an axis (66, 76, 84).

19. A round baler according to claim 18, **characterised in that** the ramps (82) are connected by a crossbar (86) and form a U-shaped stirrup (80).

20. A round baler according to one or more of the preceding claims, **characterised in that** a second chute device, constructed as a bale holding means (21), is connected downstream of the first chute device (20), which second chute device, in a working position (21), extends the sloping plane of the first chute device (20), along which the round bale (42a, b, c) rolls as far as the wrapping table (13).

21. A round baler according to claim 20, **characterised in that** the bale holding means (21) is mounted rotatably on a wrapping table (13) about an axis (49) parallel to the axis (37) of the chute device (20).

22. A round baler according to claim 21, **characterised in that** the wrapping table (13) may be swivelled about a horizontal transverse axis (12) positioned on the supporting frame (2) into a loading position (52), a wrapping position (55) and a discharge position (58).

23. A round baler according to one of claims 20 to 22, **characterised in that,** in its loading position (52), the wrapping table (13) approximately forms a right angle with the bale holding means (21) located in its working position (23).

24. A round baler according to claim 23, **characterised in that** the round bale (42c) rests against the wrapping table (13) when in its end position (54) on the bale holding means (21) and is swivelled together with the wrapping table (13) into the wrapping position (55).

25. A round baler according to claims 10, 11 and 24, **characterised in that** the outer swivel arc (43) of the rear housing (10) and the outer swivel arc (64) of the round bale (42c) swivelled with the wrapping table (13) do not overlap.

26. A round baler according to claim 22, **characterised in that** the bale holding means (21) is swivelled out of the circular path of a revolving film roll (19) when the wrapping table (13) is in the wrapping position (55) and extends in this rest position (51) forwards approximately parallel to the wrapping table (13) in the direction of travel (11).

27. A round baler according to one or more of the preceding claims, **characterised in that** hydraulic (33, 31, 50, 59), mechanical (70, 87), electrical and/or pneumatic means are provided for actuation of the chute device (20, 65, 75), the bale holding means (21) and/or for the wrapping table (13).

28. A round baler according to one or more of the preceding claims, **characterised in that** at least actuation of the chute device (20, 65, 75) proceeds directly or indirectly via the rear housing (10, 69, 88) or via the round bale (42a, b, c, 83).

29. A round baler according to claim 27 or claim 28, **characterised in that** a sensor (35) is provided, which effects displacement, under the action of force, of the chute device (20) into the working position (22) during opening of the rear housing (10).

30. A round baler according to one or more of the preceding claims, **characterised in that** closure of the rear housing (10) and actuation of the chute devices (20, 21) and/or the wrapping table (13) proceed directly or indirectly in dependence on a sensor (53) arranged on the wrapping table (13).

31. A round baler according to one or more of the preceding claims, **characterised in that** different inclinations of the chute device (20, 65, 75) may be set manually.

32. A round baler according to one or more of the preceding claims, **characterised in that** the chute device (20, 65, 75) is in active connection with a control and/or operating unit (34), by means of which a plurality of inclinations of the chute device (20, 65, 75) may be preset and set by the operator from the tractor by pressing a button.

33. A round baler according to one or more of the preceding claims, **characterised in that** the round baler (1) or the wrapper (3) comprises an inclination measuring means (61), which measures the slant of the round baler (1) or the wrapper (3) relative to the vertical.

34. A round baler according to claim 33, **characterised in that** the inclination of the chute device (20) is controlled or adjusted automatically as a function of the measured slant.

35. A round baler according to claim 33 or claim 34, **characterised in that** the angle of tilt of the wrapping table (13) for discharge of the round bale (57) and/or the tilting speed of the wrapping table (13) is controlled or adjusted as a function of the measured slant.

36. A round baler according to one or more of the preceding claims, **characterised in that** the round baler (1, 67, 77) and the wrapper (3) are arranged on the same running gear.

37. A round baler according to one or more of the preceding claims, **characterised in that** the wrapper (3) may be detached from the round baler (1, 67, 77) and the chute device (20, 65, 75) retains the same function in the case of solo operation of the round baler (1, 67, 77).

## Patentansprüche

1. Rundballenpresse (1, 67, 77) für landwirtschaftliche Halmgüter, welche in Kombination mit einer Wickelvorrichtung (3) zum Umwickeln eines Rundballens mit Folie auf wenigstens einem Fahrwerk angeordnet ist, wobei zwischen der Rundballenpresse (1, 67, 77) und der Wickelvorrichtung (3) wenigstens eine Abrolleinrichtung für den fertigen Rundballen (9, 42a, 83) vorgesehen ist, **dadurch gekennzeichnet, daß** die Neigung der Abrolleinrichtung (20, 65, 75) verstellbar ist.

2. Rundballenpresse nach Anspruch 1, **dadurch gekennzeichnet, daß** die Abrolleinrichtung (20, 65, 75) um wenigstens eine horizontale, quer zur Abrollrichtung (63) des Rundballens (9, 42a, 83) gelegene Drehachse (37, 66, 76, 84) beweglich ist.

3. Rundballenpresse nach Anspruch 2, **dadurch gekennzeichnet, daß** eine Achse als Drehschiebeführung ausgebildet ist.

4. Rundballenpresse nach Anspruch 2 oder 3, **dadurch gekennzeichnet, daß** die Achse (76, 84) an der Rundballenpresse (77) angeordnet ist.

5. Rundballenpresse nach Anspruch 2 oder 3, **dadurch gekennzeichnet, daß** die Achse (37, 66) am Tragrahmen (2, 68) von Rundballenpresse (1, 67) und Wickelvorrichtung (3) angeordnet ist.

6. Rundballenpresse nach einem oder mehreren der vorhergehenden Ansprüche, **dadurch gekennzeichnet, daß** für die Abrolleinrichtung (20, 65, 75) wenigstens zwei Stellungen (22, 32, 72, 71, 95, 90) vorgesehen sind.

7. Rundballenpresse nach Anspruch 6, **dadurch gekennzeichnet, daß** die Abrolleinrichtung (20, 65, 75) bei geöffneter oder teilgeöffneter Position (8) des Hintergehäuses (10, 69, 88) wenigstens eine Arbeitsstellung (22, 72, 95) und bei geschlossener Position (25) des Hintergehäuses (10, 69, 88) eine Ruhestellung (32, 71, 90) einnimmt.

8. Rundballenpresse nach Anspruch 6 oder 7, **dadurch gekennzeichnet, daß** sich das in Fahrtrichtung (11) vordere Ende (27, 79) der Abrolleinrichtung (20, 75) in ihrer Arbeitsstellung (22, 94) in dem nach Aufklappen des Hintergehäuses (10, 88) freigewordenen Raum an die Preßelemente (5, 85) im Vordergehäuse (6, 77) anschließt.

9. Rundballenpresse nach einem der Ansprüche 6 bis 8, **dadurch gekennzeichnet, daß** das in Fahrtrichtung (11) hintenliegende Ende (39, 44, 81) der Abrolleinrichtung (20, 65, 75) in ihrer Arbeitsstellung (22, 95) während des Abrollens des Rundballens (42a, b, c) an einem gestellfesten Anschlag (40, 41, 74, 96) aufliegt.

10. Rundballenpresse nach Anspruch 9, **dadurch gekennzeichnet, daß** das hintenliegende Ende (39, 44, 81) der Abrolleinrichtung (20, 75) in ihrer Arbeitsstellung (22, 95) einen solchen Abstand zum Erdboden und zum Wickelgerät (3) hin aufweist, daß der Rundballen (42a, b, c) auf einer gedachten Verlängerung nach hinten bis zur Wickelvorrichtung (3) oberhalb des Erdbodens in eine Endposition (54) rollt, die außerhalb des äußeren Schwenkbogens (43) des Hintergehäuses (8) liegt.

11. Rundballenpresse nach einem der Ansprüche 6 bis 10, **dadurch gekennzeichnet, daß** das hintere Ende (39, 81) der Abrolleinrichtung (20, 65, 75) in ihrer Ruhestellung (32, 71, 90) über den äußeren Schwenkbogen (43) des Hintergehäuses (10, 69, 88) hinausragt.

12. Rundballenpresse nach einem der Ansprüche 6 bis 11, **dadurch gekennzeichnet, daß** die Abrolleinrichtung wenigstens in ihrer Arbeitsstellung in Längsrichtung kraftbeaufschlagt ein- und ausfahrbar ist.

13. Rundballenpresse nach einem der vorhergehenden Ansprüche, **dadurch gekennzeichnet, daß** die Abrolleinrichtung an beiden Seiten Leitbleche für die Seitenführung des Rundballens aufweist.

14. Rundballenpresse nach einem oder mehreren der vorhergehenden Ansprüche, **dadurch gekennzeichnet, daß** die Abrolleinrichtung (20, 65, 75) ein- oder mehrteilig ausgestaltet ist.

15. Rundballenpresse nach einem oder mehreren der vorhergehenden Ansprüche, **dadurch gekennzeichnet, daß** die Abrolleinrichtung (75) über Lenker (79) mit der Rundballenpresse (1) beziehungsweise mit dem Tragrahmen (2) gelenkig verbunden ist.

16. Rundballenpresse nach einem oder mehreren der vorhergehenden Ansprüche 6 bis 14, **dadurch gekennzeichnet, daß** die Abrolleinrichtung (65, 75) über eine Steuerstange (70, 87) mit dem Hintergehäuse (69, 88) kuppelbar ist.

17. Rundballenpresse nach einem oder mehreren der vorhergehenden Ansprüche 6 bis 15, **dadurch gekennzeichnet, daß** die Abrolleinrichtung (20, 65, 75) während des Öffnens des Hintergehäuses (10, 69, 88) kraftbeaufschlagt in ihre Arbeitsstellung (22, 72, 95) verstellt wird.

18. Rundballenpresse nach einem oder mehreren der vorhergehenden Ansprüche 6 bis 17, **dadurch gekennzeichnet, daß** die Abrolleinrichtung von zwei im Abstand nebeneinander angeordneten, um eine Achse (66, 76, 84) schwenkbaren Rampen (65, 82) gebildet wird.

19. Rundballenpresse nach Anspruch 18, **dadurch gekennzeichnet, daß** die Rampen (82) durch einen Quersteg (86) verbunden sind und einen U-förmigen Bügel (80) bilden.

20. Rundballenpresse nach einem oder mehreren der vorhergehenden Ansprüche, **dadurch gekennzeichnet, daß** der ersten Abrolleinrichtung (20) eine zweite, als Ballenhalteeinrichtung (21) ausgebildete Abrolleinrichtung nachgeschaltet ist, welche in einer Arbeitsstellung (21) eine verlängerte schiefe Ebene der ersten Abrolleinrichtung (20) bildet, auf der der Rundballen (42a, b, c) bis zum Wickeltisch (13) rollt.

21. Rundballenpresse nach Anspruch 20, **dadurch gekennzeichnet, daß** die Ballenhalteeinrichtung (21) um eine zur Achse (37) der Abrolleinrichtung (20) parallele Achse (49) drehbar an einem Wickeltisch (13) gelagert ist.

22. Rundballenpresse nach Anspruch 21, **dadurch gekennzeichnet, daß** der Wickeltisch (13) um eine am Tragrahmen (2) gelegene, horizontale Querachse (12) in eine Ladestellung (52), eine Wickelstellung (55) und eine Entladestellung (58) verschwenkbar ist.

23. Rundballenpresse nach einem der Ansprüche 20 bis 22, **dadurch gekennzeichnet, daß** der Wickeltisch (13) in seiner Ladestellung (52) mit der in ihrer Arbeitsstellung (23) befindlichen Ballenhalteeinrichtung (21) etwa einen rechten Winkel einschließt.

24. Rundballenpresse nach Anspruch 23, **dadurch gekennzeichnet, daß** der Rundballen (42c) in seiner Endlage (54) auf der Ballenhalteeinrichtung (21) am Wickeltisch (13) anliegt und gemeinsam mit dem Wickeltisch (13) in die Wickelstellung (55) geschwenkt wird.

25. Rundballenpresse nach den Ansprüchen 10, 11 und 24, **dadurch gekennzeichnet, daß** sich der äußere Schwenkbogen (43) des Hintergehäuses (10) und der äußere Schwenkbogen (64) des mit dem Wickeltisch (13) verschwenkten Rundballens (42c) nicht überschneiden.

26. Rundballenpresse nach Anspruch 22, **dadurch gekennzeichnet, daß** die Ballenhalteeinrichtung (21) in der Wickelstellung (55) des Wickeltisches (13) aus der Umlaufbahn einer umlaufenden Folienrolle (19) herausgeschwenkt ist und sich in dieser Ruhestellung (51) etwa parallel zum Wickeltisch (13) in Fahrtrichtung (11) nach vorn erstreckt.

27. Rundballenpresse nach einem oder mehreren der vorhergehenden Ansprüche, **dadurch gekennzeichnet, daß** für die Betätigung der Abrolleinrichtung (20, 65, 75), der Ballenhalteeinrichtung (21) und/oder für den Wickeltisch (13) hydraulische (33, 31, 50, 59), mechanische (70, 87), elektrische und/oder pneumatische Mittel vorgesehen sind.

28. Rundballenpresse nach einem oder mehreren der vorhergehenden Ansprüche, **dadurch gekennzeichnet, daß** wenigstens die Betätigung der Abrolleinrichtung (20, 65, 75) direkt oder indirekt durch das Hintergehäuse (10, 69, 88) oder durch den Rundballen (42a, b, c, 83) erfolgt.

29. Rundballenpresse nach Anspruch 27 oder 28, **dadurch gekennzeichnet, daß** ein Sensor (35) vorgesehen ist, welcher während des Öffnens des Hintergehäuses (10) eine kraftbeaufschlagte Verstellung der Abrolleinrichtung (20) in die Arbeitsstellung (22) bewirkt.

30. Rundballenpresse nach einem oder mehreren der vorhergehenden Ansprüche, **dadurch gekennzeichnet, daß** die Schließung des Hintergehäuses (10), die Betätigung der Abrolleinrichtungen (20, 21) und/oder des Wickeltisches (13) direkt oder indirekt in Abhängigkeit von einem am Wickeltisch (13) angeordneten Sensor (53) erfolgt.

31. Rundballenpresse nach einem oder mehreren der vorhergehenden Ansprüche, **dadurch gekennzeichnet, daß** unterschiedliche Neigungen der Abrolleinrichtung (20, 65, 75) manuell einstellbar sind.

32. Rundballenpresse nach einem oder mehreren der vorhergehenden Ansprüche, **dadurch gekennzeichnet, daß** die Abrolleinrichtung (20, 65, 75) mit einer Steuer- und/oder Bedieneinheit (34) in Wirkverbindung steht, an der mehrere Neigungen der Abrolleinrichtung (20, 65, 75) voreinstellbar und vom Bediener vom Schlepper aus per Tastendruck einstellbar sind.

33. Rundballenpresse nach einem oder mehreren der vorhergehenden Ansprüche, **dadurch gekennzeichnet, daß** die Rundballenpresse (1) oder die Wickelvorrichtung (3) eine Neigungsmeßeinrichtung (61) aufweist, welche die Schiefstellung der Rundballenpresse (1) oder der Wickelvorrichtung (3) relativ zur Lotrechten mißt.

34. Rundballenpresse nach Anspruch 33, **dadurch gekennzeichnet, daß** die Neigung der Abrolleinrichtung (20) automatisch in Abhängigkeit von der gemessenen Schiefstellung gesteuert oder geregelt wird.

35. Rundballenpresse nach Anspruch 33 oder 34, **dadurch gekennzeichnet, daß** der Kippwinkel des Wickeltisches (13) für das Entladen des Rundballens (57) und/oder die Kippgeschwindigkeit des Wickeltisches (13) in Abhängigkeit von der gemessenen Schiefstellung gesteuert oder geregelt wird.

36. Rundballenpresse nach einem oder mehreren der vorhergehenden Ansprüche, **dadurch gekennzeichnet, daß** die Rundballenpresse (1, 67, 77) und die Wickelvorrichtung (3) auf demselben Fahrwerk angeordnet sind.

37. Rundballenpresse nach einem oder mehreren der vorhergehenden Ansprüche, **dadurch gekennzeichnet, daß** die Wickelvorrichtung (3) von der Rundballenpresse (1, 67, 77) abbaubar ist und die Abrolleinrichtung (20, 65, 75) im Solobetrieb der Rundballenpresse (1, 67, 77) die gleiche Funktion behält.

## Revendications

1. Presse à balles rondes (1, 67, 77) pour des produits agricoles, qui est agencée, en combinaison avec une emballeuse (3), pour emballer une balle ronde sous film, sur au moins un engrenage de fonctionnement, au moins un dispositif de déversoir (20, 65, 75) pour la balle ronde finie (9, 42a, 83) étant fourni entre la presse à balles rondes (1, 76, 77) et l'emballeuse (3), **caractérisée en ce que** l'inclinaison du dispositif de déversoir (20, 65, 75) est ajustable.

2. Presse à balles rondes selon la revendication 1, **caractérisée en ce que** le dispositif de déversoir (20, 65, 75) peut être déplacé autour d'au moins un axe horizontal de rotation (35, 66, 76, 94) positionné perpendiculairement à la direction (63) dans laquelle la balle ronde (9, 42a, 83) roule.

3. Presse à balles rondes selon la revendication 2, **caractérisée en ce qu'**un axe (93) prend la forme d'un guide coulissant rotatif (91, 92).

4. Presse à balles rondes selon la revendication 2 ou 3, **caractérisée en ce que** l'axe (76, 84) est agencée sur la presse à balles rondes (77).

5. Presse à balles rondes selon la revendication 2 ou 3, **caractérisée en ce que** l'axe (37, 66) est agencé sur le châssis de support (2, 68) de la presse à balles rondes (1, 67) et de l'emballeuse (3).

6. Presse à balles rondes selon une ou plusieurs des revendications précédentes, **caractérisée en ce qu'**au moins deux positions (22, 32, 72, 71, 95, 90) sont fournies pour le dispositif de déversoir (20, 65, 75).

7. Presse à balles rondes selon la revendication 6, **caractérisée en ce que** le dispositif de déversoir (20, 65, 75) prend au moins une position de fonctionnement (22, 72, 95) lorsque le boîtier arrière se trouve dans la position ouverte ou partiellement ouverte (8) et une position de repos (32, 71, 90) lorsque le boîtier arrière (10, 69, 88) se trouve dans une position fermée (25).

8. Presse à balles rondes selon la revendication 6 ou 7, **caractérisée en ce que**, à sa position de fonctionnement (22, 94), l'extrémité frcntale (27, 79), dans la direction de déplacement (11), du dispositif de déversoir (20, 75) est contiguë aux éléments de mise en balles (5, 85) dans le boîtier avant (6, 77) dans l'espace libéré après l'ouverture par balancement du boîtier arrière (10, 88).

9. Presse à balles rondes selon l'une quelconque des revendications 6 à 8, **caractérisée en ce que** l'extrémité (39, 44, 81) du dispositif de déversoir (20, 65, 75), se trouvant à l'arrière dans la direction de déplacement (11), se trouve à sa position de fonctionnement (22, 95), pendant l'enroulement de la balle ronde (42a, b, c), contre une butée limite (40, 41, 74, 96) fixée au châssis.

10. Presse à balles rondes selon la revendication 9, **caractérisée en ce que** l'extrémité arrière (39, 44, 81) du dispositif de déversoir (20, 75) présente, à sa position de fonctionnement (22, 95), une distance à partir du sol et à partir de l'emballeuse (3) telle que la balle ronde (42a, b, c) roule au-dessus du sol sur une extension imaginaire vers l'arrière jusqu'à l'emballeuse (3) dans une position d'extrémité (54) qui se trouve à l'extérieur de l'arc pivotant extérieur (43) du boîtier arrière (8).

11. Presse à balles rondes selon l'une quelconque des revendications 6 à 10, **caractérisée en ce que** l'extrémité arrière (39, 81) du dispositif de déversoir (20, 65, 75) se projette, à sa position de repos (32, 71, 90), au-delà de l'arc pivotant extérieur (43) du boîtier arrière (10, 69, 88).

12. Presse à balles rondes selon l'une quelconque des revendications 6 à 11, **caractérisée en ce que** le dispositif de déversoir peut être étendu et rétracté dans la direction longitudinale au moins à sa position de fonctionnement sous l'action de force.

13. Presse à balles rondes selon une ou plusieurs des revendications précédentes, **caractérisée en ce que**, des deux côtés, le dispositif de déversoir comprend des plaques de guidage pour le guidage latéral de la balle ronde.

14. Presse à balles rondes selon une ou plusieurs des revendications précédentes, **caractérisée en ce que** le dispositif de déversoir (20, 65, 75) est d'une constructicn en une seule partie ou en plusieurs parties.

15. Presse à balles rondes selon une ou plusieurs des revendications précédentes, **caractérisée en ce que** le dispositif de déversoir (75) est connecté de manière articulée par l'intermédiaire de barres (79) à la presse à balles rondes (1) ou au châssis de support (2).

16. Presse à balles rondes selon une ou plusieurs des revendications 6 à 14, **caractérisée en ce que** le dispositif de déversoir (65, 75) peut être couplé au boîtier arrière (69, 88) par l'intermédiaire d'une tige de contrôle (70, 87).

17. Presse à balles rondes selon une ou plusieurs des revendications 6 à 15, **caractérisée en ce que** le dispositif de déversoir (20, 65, 75) est déplacé à sa position de fonctionnement (22, 72, 95) sous l'action de force pendant l'ouverture du boîtier arrière (10, 69, 88).

18. Presse à balles rondes selon une ou plusieurs des revendications 6 à 17, **caractérisée en ce que** le dispositif de déversoir prend la forme de deux rampes (65, 82) agencées de manière espacée l'une à côté de l'autre et pouvant pivoter autour d'un axe (66, 76, 84).

19. Presse à balles rondes selon la revendication 19, **caractérisée en ce que** les rampes (82) sont connectées par une traverse (86) et forment un étrier en forme de U (80).

20. Presse à balles rondes selon une ou plusieurs des revendications précédentes, **caractérisée en ce qu'**un second dispositif de déversoir, construit en tant que moyen de rétention de balle (21), est connecté en aval du premier dispositif de déversoir (20), ledit second dispositif de déversoir, à une position de fonctionnement (21), s'étend dans le plan d'inclinaison du premier dispositif de déversoir (20), le long duquel la balle ronde (42a, b, c) roule jusqu'à la table d'emballage (13).

21. Presse à balles rondes selon la revendication 20, **caractérisée en ce que** le moyen de rétention de balle (21) est monté de manière à pouvoir tourner sur une table d'emballage (13) autour d'un axe (49) parallèle à l'axe (37) du dispositif de déversoir (20).

22. Presse à balles rondes selon la revendication 21, **caractérisée en ce que** la table d'emballage (13) peut être pivotée autour d'un axe transversal horizontal (12) positionné sur le châssis de support (2) à une position de chargement (52), une position d'emballage (55) et une position de déchargement (58).

23. Presse à balles rondes selon l'une des revendications 20 à 22, **caractérisée en ce que**, à sa position de chargement (52), la table d'emballage (13) forme approximativement un angle droit avec le moyen de rétention de balle (21) à sa position de fonctionnement (23).

24. Presse à balles rondes selon la revendication 23, **caractérisée en ce que** la balle ronde (42c) repose contre la table d'emballage (13) lorsqu'elle se trouve à sa position d'extrémité (54) sur le moyen de rétention de balle (21) et est pivotée ensemble avec la table d'emballage (13) à la position d'emballage (55).

25. Presse à balles rondes selon les revendications 10, 11 et 24, **caractérisée en ce que** l'arc pivotant extérieur (43) du boîtier arrière (10) et l'arc pivotant extérieur (64) de la balle ronde (42c) pivotée avec la table d'emballage (13) ne se chevauchent pas.

26. Presse à balles rondes selon la revendication 22, **caractérisée en ce que** le moyen de rétention de balle (21) est pivoté hors du chemin circulaire d'un rouleau de film en rotation (19) lorsque la table d'emballage (13) se trouve à la position d'emballage (55) et s'étend dans cette position de repos (51) vers l'avant approximativement parallèlement à la table d'emballage (13) dans la direction de déplacement (11).

27. Presse à balles rondes selon une ou plusieurs des revendications précédentes, **caractérisée en ce que** des moyens hydrauliques (33, 31, 50, 59), mécaniques (70, 87), électriques et/ou pneumatiques sont fournis pour l'actionnement du dispositif de déversoir (20, 65, 75), du moyen de rétention de balle (21) et/ou de la table d'emballage (13).

28. Presse à balles rondes selon une ou plusieurs des revendications précédentes, **caractérisée en ce qu'**au moins l'actionnement du dispositif de déversoir (20, 65, 75) s'effectue directement ou indirectement par l'intermédiaire du boîtier arrière (10, 69, 88) ou par l'intermédiaire de la balle ronde (42a, b, c, 83).

29. Presse à balles rondes selon la revendication 27 ou 28, **caractérisée en ce qu'**un capteur (35) est fourni, qui effectue le déplacement, sous l'action de force, du dispositif de déversoir (20) à la position de fonctionnement (22) pendant l'ouverture du boîtier arrière (10).

30. Presse à balles rondes selon une ou plusieurs des revendications précédentes, **caractérisée en ce que** la fermeture du boîtier arrière (10) et l'actionnement des dispositifs de déversoir (20, 21) et/ou de la table d'emballage (13) s'effectuent directement ou indirectement en dépendance avec un capteur (53) agencé sur la table d'emballage (13).

31. Presse à balles rondes selon une ou plusieurs des revendications précédentes, **caractérisée en ce que** différentes inclinaisons du dispositif de déversoir (20, 65, 75) peuvent être réglées manuellement.

32. Presse à balles rondes selon une ou plusieurs des revendications précédentes, **caractérisée en ce que** le dispositif de déversoir (20, 65, 75) est en connexion active avec une unité de commande et/ou d'exploitation (34), au moyen de laquelle une pluralité d'inclinaisons du dispositif de déversoir (20, 65, 75) peuvent être préréglées et réglées par l'opérateur depuis le tracteur en appuyant sur un bouton.

33. Presse à balles rondes selon une ou plusieurs des revendications précédentes, **caractérisée en ce que** la presse à balles rondes (1) ou l'emballeuse (3) comprend un moyen de mesure d'inclinaison (61) qui mesure la pente de la presse à balles rondes (1) ou de l'emballeuse (3) par rapport à la verticale.

34. Presse à balles rondes selon la revendication 33, **caractérisée en ce que** l'inclinaison du dispositif de déversoir (20) est contrôlée ou ajustée automatiquement en fonction de la pente mesurée.

35. Presse à balles rondes selon la revendication 33 ou 34, **caractérisée en ce que** l'angle d'inclinaison de la table d'emballage (13) pour le déchargement de la balle ronde (57) et/ou la vitesse d'inclinaison de la table d'emballage (13) sont contrôlés ou ajustés en fonction de la pente mesurée.

36. Presse à balles rondes selon une ou plusieurs des revendications précédentes, **caractérisée en ce que** la presse à balles rondes (1, 67, 77) et l'emballeuse (3) sont agencées sur le même engrenage de fonctionnement.

37. Presse à balles rondes selon une ou plusieurs des revendications précédentes, **caractérisée en ce que** l'emballeuse (3) peut être détachée de la presse à balles rondes (1, 67, 77) et le dispositif de déversoir (20, 65, 75) conserve la même fonction dans le cas du fonctionnement seulement de la presse à balles rondes (1, 67, 77).
